# EUROPEAN PATENT APPLICATION

(11) **EP 2 801 404 A1**
(43) Date of publication of application: **12.11.2014**
(21) Application number: 14166875.6
(22) Date of filing: 02.05.2014
(51) Int. Cl.: B01J 20/04, B01J 20/30, B01J 20/28, C02F 1/28, C01B 25/32

(54) **Process for preparing hydroxyapatite-based filtration material, and plant for implementing the process**

(30) Priority: 08.05.2013 IT VE20130023
(71) Applicant: Gruppo Zilio S.P.A., 36022 Cassola (IT)
(72) Inventor: Zilio, Damiano, 36022 Cassola (IT); Ragazzon, Daniele, 36022 Cassola (IT)
(74) Representative: Piovesana, Paolo

(57) **Abstract**

A process for preparing hydroxyapatite-based filtration material, characterised by:
- mixing hydroxyapatite in powder form, calcined within a range between 600°C and 800°C, and having particles of dimensions less than 325 mesh, with water in a weight percentage ratio of water/hydroxyapatite between 35:65 and 45:55 at a temperature between 15°C and 40°C, and at atmospheric pressure,
- feeding the mixture obtained to an extrusion stage to obtain small cylinders,
- drying the cylinders at a temperature between 70°C and 90°C.

## Description

The present invention relates to a process for preparing hydroxyapatite-based filtration material, and a plant for implementing the process.

It is known to remove fluorides from water to achieve potabilization by adsorption on hydroxyapatite-based filtration masses.

The action mechanism involves substituting a hydroxyl group present in the hydroxyapatite crystalline structure by a fluoride ion present in water. As the hydroxyapatite has much more affinity for the fluoride ion than for the hydroxyl, the exchange equilibrium is completely displaced towards the form in which the fluoride is adsorbed, hence giving rise to the extreme effectiveness of the hydroxyapatite filtration function.

Hydroxyapatite is present in nature as a mineral from which the pure product is obtained by various processing steps including solubilization, precipitation of the product, and finally calcination to obtain a very fine powder.

Hydroxyapatite can also be obtained synthetically by reaction of phosphoric acid with calcium hydroxide under controlled conditions.

Whatever process is used to obtain the hydroxyapatite, it has a high adsorption capacity but presents the drawback of being in the form of a very fine powder with particle dimensions of just a few microns.

The small dimensions of these particles consequently make it impossible to use them in normal water potabilization filters, in which the filtration layer is traversed by a water flow which would entrain the hydroxyapatite power with it.

To obviate these drawbacks, it has been proposed to mix hydroxyapatite with a binder and then subject the mixture to extrusion to obtain pellets of the desired dimensions.

However this process has the drawback that the presence of the binder drastically reduces the active surface of the hydroxyapatite with a consequently low yield in terms of adsorption capacity as it obstructs the pores which contribute overwhelmingly to the adsorption process.

The object of the invention is to provide a hydroxyapatite-based filtration material which can be used for water potabilization.

This object is attained according to the invention by a process for preparing hydroxyapatite-based filtration material as described in claim 1.

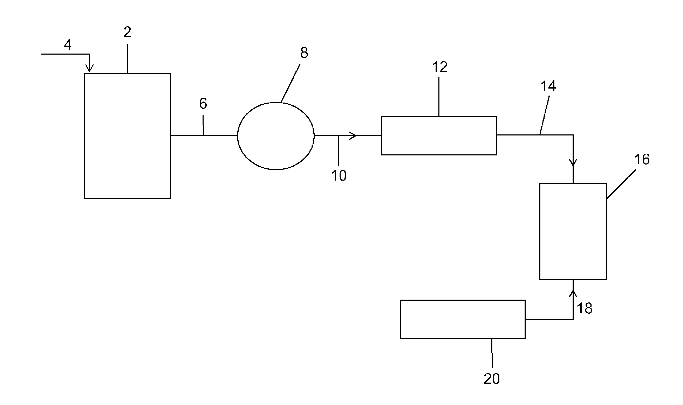

The present invention is further clarified hereinafter by way of a preferred embodiment thereof provided by way of non-limiting example with reference to the accompanying drawing showing in schematic view a plant for implementing the process.

As can be seen from the figure, the plant for implementing the process according to the invention comprises substantially a tank 2 for containing hydroxyapatite in powdered form, calcined at a temperature between 600°C and 800°C, preferably at 600°C, with particles of dimensions less than 325 mesh, to which a water inlet conduit 4 and a conduit 6 feeding a mixer 8 are connected.

The outlet 10 of the mixer 8 is connected to an extruder 12, the outlet 14 of which is connected to a drier 16 to which a conduit 18 originating from a hot air generator 20 is connected.

According to the process of the invention, a water quantity is added to the hydroxyapatite in powder form in the tank 2 in a weight percentage ratio of water/hydroxyapatite between 35:65 and 45:55, preferably 40:60, and the whole is fed to the mixer 8 such as to obtain a friable mixture.

This range of values is chosen for the following reasons:
- it enables the material to be extruded into the form of small cylinders,
- in the drying stage during which the water is completely removed, it enables the dry cylinders to achieve optimal porosity for fluoride absorption.

With this range an absorption capacity of 8g F/kg of apatite is achieved compared with the 5g F/kg of apatite obtained at calcining temperatures exceeding 800°C.

In particular, mixing takes place at a temperature between 15°C and 40°C at atmospheric pressure.

The product in the form of a friable mixture is fed to the extruder 12 to obtain small cylinders of variable length and of diameter equal to that of the passage port of the extruder die. Preferably these cylinders have a diameter between 1 and 5 mm and a length between 1 and 6 mm, but in any event of dimensions suitable for being retained by the slots provided in the base of the filter of the filtration plant.

The cylinders or pellets are then fed to the drier 16 where they are struck by a flow of hot air such as to evaporate all the water contained therein, to then be fed into the filters where potabilization is carried out.

The pellets can also be dried by irradiation by lamps or by microwaves, in addition to exposure to hot air.

In particular the drying temperature, which is between 70°C and 90°C, preferably 80°C, is chosen as a compromise between lower values which favour fluoride adsorption but at the same time give rise to undesired formation of bacterial colonies, and higher values which ensure an effective sterilization but at the same time reduce the adsorption capacity of the hydroxyapatite.

## Claims

1. A process for preparing hydroxyapatite-based filtration material, **characterised by**:
- mixing hydroxyapatite in powder form, calcined within a range between 600°C and 800°C, and having particles of dimensions less than 325 mesh, with water in a weight percentage ratio of water/hydroxyapatite between 35:65 and 45:55 at a temperature between 15°C and 40°C, and at atmospheric pressure,
- feeding the mixture obtained to an extrusion stage to obtain small cylinders,
- drying the cylinders at a temperature between 70°C and 90°C.

2. A process as claimed in claim 1, **characterised by** mixing the water with the hydroxyapatite in a weight ratio of 40:60.

3. A plant for obtaining filtration material claimed in one or more of claims from 1 to 2, **characterised by** comprising:
- a tank (2) for containing hydroxyapatite in powdered form, calcined within a range between 600°C and 800°C, and with particles of dimensions less than 325 mesh, to which a water entry conduit (4) is connected,
- a mixer (8) for the mixture leaving said tank,
- an extruder (17) for the material originating from the mixer (8),
- a drier (16) for the product leaving the extruder (12).
